(19) Europäisches Patentamt
European Patent Office
Office européen des brevets

(11) **EP 3 094 507 B1**

(12) **FASCICULE DE BREVET EUROPEEN**

(45) Date de publication et mention
de la délivrance du brevet:
**23.10.2019 Bulletin 2019/43**

(21) Numéro de dépôt: **14805944.7**

(22) Date de dépôt: **03.12.2014**

(51) Int Cl.:
**B60C 15/00** (2006.01)   **B60C 9/02** (2006.01)
**B60C 9/00** (2006.01)   **B60C 9/04** (2006.01)
**B60C 9/08** (2006.01)   **B60C 9/20** (2006.01)
**B60C 15/06** (2006.01)   **B60C 11/00** (2006.01)
**B60C 13/00** (2006.01)   **B60B 21/04** (2006.01)
**B60C 9/06** (2006.01)   **B60C 15/04** (2006.01)

(86) Numéro de dépôt international:
**PCT/EP2014/076391**

(87) Numéro de publication internationale:
**WO 2015/086395 (18.06.2015 Gazette 2015/24)**

(54) **PNEUMATIQUE A CARCASSE RADIALE OU CROISEE RENFORCE**

VERSTÄRKTER REIFEN MIT VORGESPANNTER ODER RADIALER KARKASSE

REINFORCED BIAS- OR RADIAL-CARCASS TYRE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **12.12.2013 FR 1362449**

(43) Date de publication de la demande:
**23.11.2016 Bulletin 2016/47**

(73) Titulaire: **Compagnie Générale des
Etablissements Michelin
63000 Clermont-Ferrand (FR)**

(72) Inventeur: **FERIGO, Hervé
F-63040 Clermont-Ferrand Cedex 9 (FR)**

(74) Mandataire: **Bauvir, Jacques et al
Manufacture Française des
Pneumatiques Michelin
CBS/CORP/J/PI - F35 - Ladoux
23, place des Carmes-Déchaux
63040 Clermont-Ferrand Cedex 9 (FR)**

(56) Documents cités:
EP-A1- 1 080 948    CN-A- 1 775 571
JP-A- H02 293 207   US-A- 3 961 657

**Description**

L'invention se rapporte aux pneumatiques à carcasse radiale ou à carcasse croisée.

Les pneumatiques à carcasse radiale se sont progressivement imposés sur différents marchés, et notamment le marché des pneumatiques pour véhicules de tourisme. Ce succès est dû en particulier aux qualités d'endurance, de confort et de faible résistance au roulement de la technologie radiale.

Les principales parties d'un pneumatique sont la bande de roulement, les flancs et les bourrelets. Les bourrelets sont destinés à entrer en contact avec la jante. Dans un pneumatique de technologie radiale, chacune des principales parties constituant le pneumatique, à savoir la bande de roulement, les flancs et les bourrelets, a des fonctions bien séparées les unes des autres, et a par conséquent, une constitution spécifique bien connue.

Le pneumatique radial est essentiellement renforcé par une armature de carcasse comprenant au moins une nappe de carcasse présentant un angle sensiblement égal à 90° par rapport à la direction circonférentielle du pneumatique. Cette armature de carcasse est surmontée radialement à l'extérieur, et sous la bande de roulement, de nappes de renfort formant une ceinture.

Le pneumatique à carcasse croisée se distingue d'un pneumatique de technologie radial par la présence d'au moins deux nappes carcasse croisées dont l'angle est différent de 90° par rapport à la direction circonférentielle du pneumatique. Les nappes sont dites « croisées » parce que les angles sont de signes opposés d'une nappe à l'autre.

On rappelle que la direction circonférentielle du pneumatique est la direction comprise dans un plan perpendiculaire à l'axe de rotation du pneumatique et tangente au renforcement de ceinture du pneumatique.

Suite à l'apparition de pneumatique à carcasse radiale, certains pneumatiques à carcasse croisée ont également été pourvus d'un renforcement de ceinture sous la bande de roulement.

Dans ces deux types de pneumatique, la bande de roulement, en contact directement avec le sol, a notamment pour fonction d'assurer le contact avec la route et doit s'adapter à la forme du sol. Les flancs, quant à eux, absorbent les irrégularités du sol tout en transmettant les efforts mécaniques nécessaires pour porter la charge du véhicule et assurer son mouvement.

Le renforcement de ceinture est une armature qui doit, d'une part, être suffisamment rigide vis-à-vis des déformations sur chant afin que le pneumatique développe les poussées de dérive nécessaires à son guidage, et transmettre le couple moteur ou freineur, et d'autre part, être très souple en flexion, c'est-à-dire autoriser des variations de courbure de son plan pour assurer une surface de contact du pneumatique sur le sol suffisante.

Par conséquent, le renforcement de ceinture a généralement une structure composite, lui permettant de présenter la rigidité requise pour un poids relativement faible. Le renforcement de ceinture est généralement constitué d'au moins deux nappes présentant des angles différents, comprenant des renforts, en forme de câble, enrobés de composition élastomère. Les éléments de renfort sont croisés d'une nappe à l'autre par rapport à la direction circonférentielle et sont symétriques ou non par rapport à cette direction.

On dénomme ci-après par :

- « direction longitudinale » : direction de roulement du pneumatique,

- « direction radiale » : direction coupant l'axe de rotation du pneumatique et perpendiculaire à celui-ci,

- « direction axiale » : direction parallèle à l'axe de rotation du pneumatique,

- « radialement intérieur à » : signifie sur une droite perpendiculaire à l'axe de rotation du pneumatique, plus proche de l'axe de rotation,

- radialement extérieur à » : signifie sur une droite perpendiculaire à l'axe de rotation du pneumatique, plus éloigné de l'axe de rotation,

- « plan équatorial ou plan médian » : plan perpendiculaire à l'axe de rotation du pneumatique et qui divise le pneumatique en deux moitiés sensiblement égales,

- « direction transversale ou axiale du pneumatique » : direction parallèle à l'axe de rotation,

- «plan radial ou méridien » : un plan qui contient l'axe de rotation du pneumatique.

Il est déjà connu du document JP2293207 A des pneumatiques pour poids lourds comprenant une nappe carcasse munies de renforts métalliques, dont la partie finale au niveau de chaque bourrelet, est repliée sur elle-même, deux fois, dans la direction radiale vers l'élément de renforcement circonférentiel, encore appelé tringle. Selon ce document, cette partie finale est repliée au milieu de deux couches de gomme.

Le document EP 1,080,948A1 décrit un pneumatique comprenant une armature de carcasse retournée autour d'une tringle puis repliée selon une direction axiale extérieure. Ce pliage est enrobé d'une composition élastomère comprenant des renforts.

Il est encore connu du document US 3,961,657 un pneumatique dont le flanc comprend, d'une part, une nappe carcasse constituée de deux couches axialement internes qui contournent l'élément de renforcement circonférentiel, et d'autre part, des couches de renforcement disposées axialement à l'extérieur des deux couches de contournement.

Aussi, il subsiste le besoin de pouvoir disposer d'un pneumatique présentant une meilleure poussée de dérive, qui comprend moins de matières premières, et notamment moins de couches d'élastomère, et ceci sans dégrader la résistance au roulement.

L'invention a donc pour objet un pneumatique comportant au moins une armature de carcasse comprenant des renforts, surmontée radialement à l'extérieur d'une armature de sommet, elle-même radialement à l'intérieur d'une bande de roulement, ladite armature de sommet étant constituée d'au moins une couche d'éléments de renforcement, ladite bande de roulement étant reliée à deux bourrelets par l'intermédiaire de deux flancs, lesdits bourrelets étant destinés à entrer en contact avec un crochet de jante ayant un haut de crochet de jante C, chaque bourrelet comportant au moins un élément de renforcement circonférentiel, ladite armature de carcasse comprenant une extrémité au niveau de chaque bourrelet, l'extrémité de l'armature de carcasse étant retournée une fois vers une direction radiale extérieure du pneumatique et autour de ladite tringle, de manière à former un retournement, puis étant pliée vers ladite direction radialement intérieure de manière à former un pliage formant une extrémité radialement externe et trois parties adjacentes selon un axe axial constituées d'une partie centrale, d'une partie latérale axialement interne, d'une partie latérale axialement externe.

Le pneumatique se caractérise en ce qu'une composition élastomère de découplage (14) ayant un module sécant à 10% d'allongement supérieur ou égale à 10MPa, et préférentiellement supérieur ou égale à 30MPa et inférieur ou égale à 60MPa est présente: entre la partie latérale axialement interne et la partie centrale dudit retournement, et sur l'extrémité radialement externe (12a) dudit retournement (12), ladite composition élastomère (14) étant présente sur une longueur radiale comprise entre l'extrémité radialement externe du retournement et un point F radialement interne par rapport à l'extrémité dudit retournement, situé sur le flanc et distant de ladite extrémité radialement externe d'une longueur supérieure à 10mm,

et en ce que l'extrémité radialement externe du retournement est disposée entre le haut de crochet de jante C et un point D, lesdits points C et D étant situés à la surface du flanc, et disposés de part et d'autre d'un point E situé sur le flanc correspondant à la grosseur boudin nominale, ledit point D étant disposé à une longueur radiale maximum égale à 85% de la longueur présente entre l'extrémité axiale S de l'armature de sommet et le haut de crochet de jante C.

Le pneumatique selon l'invention présente l'avantage d'être de conception simple et rapide.

De préférence, la composition élastomère de découplage est présente entre l'extrémité radialement externe dudit retournement et un point G situé radialement interne par rapport à ladite extrémité et distant de ladite extrémité radialement externe d'une longueur inférieure ou égale à 10mm.

Entre les points C et D, les renforts de la nappe carcasse peuvent présenter un angle inférieur ou égale à 85° par rapport à la direction circonférentielle, et de préférence égale à +75° ou -75° par rapport à la direction circonférentielle.

L'angle de chaque partie (centrale) et (latérales) de la nappe carcasse suit les règles de la loi de conformation suivante, selon laquelle l'angle desdites parties évolue avec le rayon du pneumatique :

$$\cos(\alpha_1) = t \ \times \cos(\alpha_0) \qquad \text{où} \qquad t = R_1/(R_0 \times (1+e))$$

avec

- $\alpha_0$ est l'angle initial avant conformation
- $\alpha_1$ est l'angle final après conformation
- $R_0$ est le rayon de pose avant conformation
- $R_1$ est le rayon de pose après conformation
- e est égal à 0.03 quel que soit le pneumatique

En appliquant cette loi, entre les points C et D, et lorsque le pliage s'effectue vers le sens intérieur selon la direction axiale, les renforts de la nappe carcasse peuvent présenter un angle successivement égale -75°, +75°, +75° en partant du sens le plus extérieur vers le sens le plus intérieur selon la direction axiale.

Entre les points D et S, les renforts de la nappe carcasse peuvent présenter un angle supérieur ou égale à 85°, et de préférence égale à 90° par rapport à la direction circonférentielle. Le point S correspond à l'extrémité axiale de la zone sommet.

A partir du point S et en direction de l'axe ZZ', les renforts de la nappe carcasse peuvent présenter un angle égale à 90° par rapport à la direction circonférentielle.

Les renforts de la nappe carcasse sont de préférence en matière textile choisie parmi la rayonne, le nylon, le polyester, l'aramide ou leur mélange.

Une partie des renforts de la partie extérieure de la nappe carcasse peut être sectionnée dans le cas d'un retournement intérieur. Une partie des renforts de la partie centrale de la nappe carcasse peut être sectionnée dans le cas d'un retournement extérieur. Cette partie peut présenter entre 3 et 8% des renforts de la partie centrale.

Les renforts sont coupés à l'issue de l'étape d'aboutage lors du procédé de fabrication du pneumatique pour favoriser la réalisation de l'étape d'aboutage. Les renforts coupés sont disposés dans une zone limitée et étroite, ils ne sont pas éparpillés mais sont concentrés sur cette zone.

Selon l'invention, l'armature de sommet comprend au moins une nappe radialement à l'extérieur de la nappe carcasse et radialement à l'intérieur à une bande de roulement.

Selon l'invention, aucune composition élastomère n'est présente entre la partie centrale et la partie latérale axialement externe du retournement.

L'invention va maintenant être décrite à l'aide des exemples et des dessins qui suivent et qui sont donnés uniquement à titre d'illustration, et sur lesquels :

- la figure 1 représente, de manière schématique, la coupe d'un demi pneumatique selon l'invention dans un plan radial, selon un premier mode de réalisation ;

- la figure 2 représente de manière schématique et agrandie, en coupe, la partie radialement inférieure d'un retournement, de la nappe carcasse, située dans la zone dite basse du pneumatique, selon le même mode de réalisation de l'invention que celui de la figure 1 ;

- la figure 3 représente de manière schématique, agrandie et en coupe, la partie radialement inférieure d'un retournement de la nappe carcasse, située dans la zone dite basse du pneumatique, selon un autre mode de réalisation.

Sur les différentes figures, les éléments techniques identiques ou similaires portent la même référence. Leur description n'est pas répétée pour ne pas alourdir le texte.

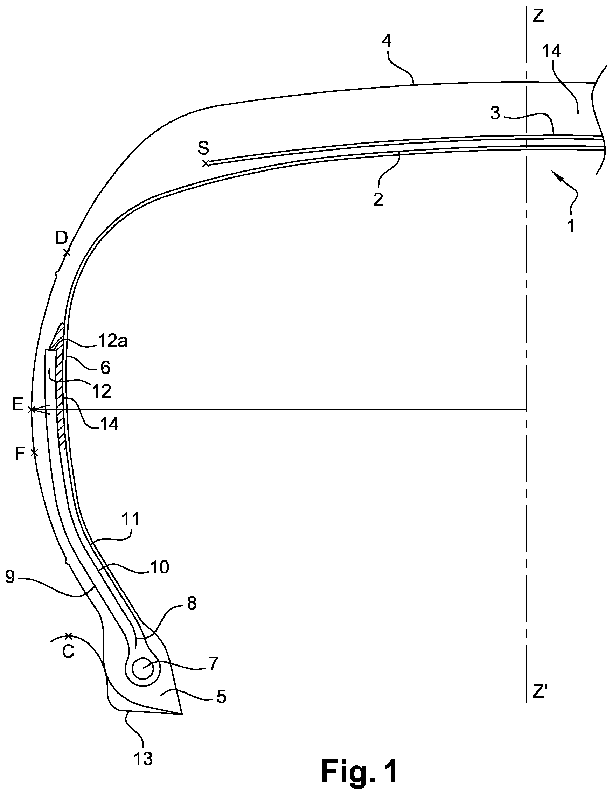

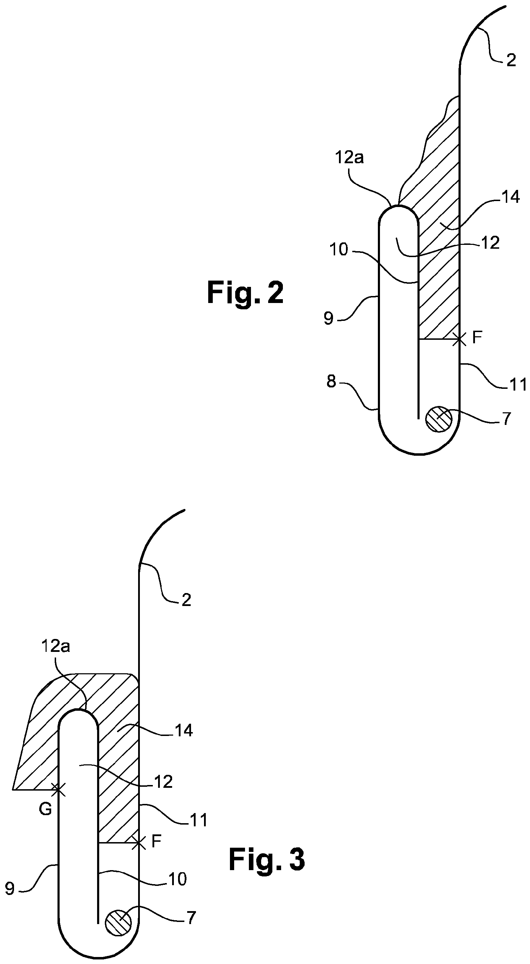

Comme le montrent les figures 1 et 2, le pneumatique selon l'invention de référence générale 1 comprend au moins une armature de carcasse 2 comprenant des renforts (non représentés). Une armature de sommet S 3 comprenant au moins une couche d'éléments de renforcement (non représentés) est surmontée radialement à l'intérieur de nappe de carcasse 2, puis d'une bande de roulement 4 radialement à l'extérieur.

La bande de roulement 4 est reliée à deux bourrelets 5 par l'intermédiaire de deux flancs 6. Chaque bourrelet 5 comprend un élément de renforcement circonférentiel 7, encore appelé tringle. Chaque bourrelet 5 est encastré dans un crochet de jante 13 comprenant un haut C de crochet de jante.

La nappe carcasse 2 comprend, au niveau de chaque bourrelet 5, une extrémité finale 8 repliée sur elle-même deux fois selon la direction radiale et vers le sens intérieur par rapport au centre du pneumatique selon la direction axiale, en direction de l'élément de renforcement circonférentiel 7. Ce pliage permet d'amener ladite extrémité finale 8 à proximité de l'élément de renforcement 7.

Ainsi au niveau des flancs 6, la nappe carcasse 2 comprend un retournement 12, et trois parties adjacentes constituées d'une partie centrale 10 et deux parties latérales axialement extérieure 9 et axialement intérieure 11.

On rappelle que la grosseur boudin nominal est la grosseur boudin d'un pneumatique monté sur jante et gonflé ; la grosseur boudin étant la distance entre les deux points situés axialement le plus à l'extérieur du pneumatique monté sur jante et gonflé.

Ainsi l'extrémité radialement supérieure 12a du retournement 12 peut être disposé sur la surface du flanc entre un point C et un point D.

Selon la représentation de la figure 1, les trois parties adjacentes 9, 10 et 11 du retournement de la nappe carcasse 2 sont repliées sur elle-même de manière à ce que la partie centrale 10 soit adjacente aux parties latérales 9 et 11. Une composition élastomère de découplage 14 est disposée entre la partie latérale 11 et la paroi du flanc 2. Cette 14 est présente jusqu'à un point F, situé sur le flanc, et distant d'une longueur égale à 17mm de la partie supérieure 12a dudit retournement 12, vers la partie intérieure de la direction radiale. Cette composition 14 peut en outre être présente sur une longueur égale à 60mm de la partie supérieure 12a du retournement vers la partie supérieure de la direction radiale. Cette composition 14 peut se prolonger jusqu'à une position axialement à l'intérieur du point S.

La présence d'une telle composition élastomère permet d'ajuster précisément le comportement et l'endurance du pneumatique.

Dans cette réalisation particulière, les renforts (non représentés) de la nappe carcasse 2 présentent un angle égale à 75° par rapport à la direction circonférentielle, entre les points C et D, ce qui permet de conserver une poussée de dérive correcte.

Ces mêmes renforts présentent un angle égale à 85° par rapport à la direction circonférentielle, entre les points D et S, ce qui permet de maintenir une bonne résistance au roulement, et un angle égale à 90° par rapport à la direction circonférentielle, dans la zone radialement interne à l'armature de sommet 3.

Sur la figure 3, on peut voir que l'extrémité 8 de la nappe carcasse 2 est également repliée deux fois dans le sens identique à celui de la figure 1. La représentation de ce mode de réalisation diffère de celui de la figure 1 par le fait que la composition de découplage 14 est en outre présente à l'extérieur de la partie la plus axialement extérieure 9 du retournement 12 jusqu'à un point G, situé sur la nappe carcasse radialement intérieur de l'extrémité 12a, et distant d'une longueur égale à 17mm de ladite partie supérieure 12a du retournement 12 vers la partie intérieure selon la direction radiale.

Selon l'invention, la valeur absolue de l'angle de chacune des trois parties de la nappe carcasse est identique ; seule change le signe de l'angle de la partie axialement extérieure 9 par rapport à la partie centrale 10 et la partie axialement intérieure 11.

Dans le mode de réalisation des figures 2 et 3, les renforts (non représentés) de la nappe carcasse 2 présentent des angles, par rapport à la direction circonférentielle, identiques au mode de réalisation de la figure 1.

## Exemple 1 : Rigidité de dérive

Les mesures de rigidité de dérive sont obtenues avec une machine équipée d'un tapis roulant et d'un dispositif de mesure des efforts transversaux appliqués sur le pneumatique, en fonction de la charge.

Ces mesures sont réalisées sur un pneumatique de référence 205/55 R 16 monté sur une jante 6.5 J 16, gonflé à une pression de 2.5bars, et soumis à une charge de 483daN. Le pneumatique est soumis à une vitesse de 80km/h avec un angle de dérive de +/- 1 degré.

Les mesures sont rassemblées dans le tableau I ci-dessous.

|  | Pneumatique témoin | Pneumatique selon l'invention |
|---|---|---|
| **Rigidité de dérive** | 100 | 106 |

Comme le montre le tableau, le pneumatique selon l'invention améliore la rigidité de dérive de 6%.

## Exemple 2 : Masse du pneumatique

Une mesure de masse du pneumatique selon l'invention en comparaison avec un pneumatique témoin, pour une référence de 205/55 R 16 montre une diminution de la masse totale du pneumatique de 3%.

## Revendications

1. Pneumatique comportant au moins une armature de carcasse (2) comprenant des renforts, surmontée radialement à l'extérieur d'une armature de sommet (3), elle-même radialement à l'intérieure d'une bande de roulement (4), ladite armature de sommet (3) étant constituée d'au moins une couche d'éléments de renforcement, ladite bande de roulement (4) étant reliée à deux bourrelets (5) par l'intermédiaire de deux flancs (6), lesdits bourrelets (5) étant destinés à entrer en contact avec un crochet de jante ayant un haut de crochet de jante (C), chaque bourrelet (5) comportant au moins un élément de renforcement circonférentiel (7), ladite armature de carcasse (2) comprenant une extrémité (8) au niveau de chaque bourrelet (5), l'extrémité (8) de l'armature de carcasse (2) étant retournée une fois vers une direction radiale extérieure du pneumatique et autour dudit élément de renforcement circonférentiel (7), de manière à former un retournement (12), puis étant pliée vers ladite direction radialement intérieure de manière à former un pliage formant une extrémité radialement externe (12a) et trois parties adjacentes selon un axe axial constituées d'une partie centrale (10), d'une partie latérale axialement interne (11), d'une partie latérale axialement externe (9), **caractérisé en ce qu'**une composition élastomère de découplage (14) ayant un module sécant à 10% d'allongement supérieur ou égale à 10MPa, et préférentiellement supérieur ou égale à 30MPa et inférieur ou égale à 60MPa est présente :

   • entre la partie latérale axialement interne (11) et la partie centrale (10) dudit retournement (12), et
   • sur l'extrémité radialement externe (12a) dudit retournement (12),
   • ladite composition élastomère (14) étant présente sur une longueur radiale comprise entre l'extrémité radialement externe (12a) du retournement (12) et un point F radialement interne par rapport à l'extrémité dudit retournement, situé sur le flanc (6) et distant de ladite extrémité radialement externe d'une longueur supérieure à 10mm,

**et en ce que**

• l'extrémité radialement externe (12a) du retournement (12) est disposée entre le haut de crochet de jante C et un point D, lesdits points C et D étant situés à la surface du flanc (6), et disposés de part et d'autre d'un point E situé sur le flanc correspondant à la grosseur boudin nominale,

• ledit point D étant disposé à une longueur radiale maximum égale à 85% de la longueur présente entre l'extrémité axiale S de l'armature de sommet (3) et le haut de crochet de jante C.

2. Pneumatique selon la revendication 1, **caractérisé en ce que** la composition élastomère de découplage (14) est présente entre l'extrémité radialement externe (12a) dudit retournement (12) et un point G situé radialement interne par rapport à ladite extrémité (12a) et distant de ladite extrémité radialement externe d'une longueur inférieure ou égale à 10mm.

3. Pneumatique selon la revendication 1, **caractérisé en ce que** les renforts de la nappe carcasse (2) présentent un angle inférieur ou égale à 85° par rapport à la direction circonférentielle entre les points C et D.

4. Pneumatique selon la revendication 3, **caractérisé en ce que** les renforts de la nappe carcasse (2) présentent un angle égale à +75° ou -75° par rapport à la direction circonférentielle entre les points C et D.

5. Pneumatique selon la revendication 1, **caractérisé en ce que** les renforts de la nappe carcasse (2) présentent un angle successivement égale -75°, +75°, +75° en partant du sens le plus extérieur vers le sens le plus intérieur selon la direction axiale entre les points C et D.

6. Pneumatique selon l'une des revendications précédentes, **caractérisé en ce que** les renforts de la nappe carcasse (2) présentent un angle supérieur ou égale à 85°, et de préférence égale à 90° par rapport à la direction circonférentielle entre les points D et S.

7. Pneumatique selon l'une des revendications précédentes, **caractérisé en ce qu'**à partir du point S et en direction de l'axe ZZ', les renforts de la nappe carcasse (2) présentent un angle égale à 90° par rapport à la direction circonférentielle.

8. Pneumatique selon l'une des revendications précédentes, **caractérisé en ce que** les renforts de la nappe carcasse (2) sont en matière textile choisie parmi la rayonne, le nylon, le polyester, l'aramide ou leur mélange.

9. Pneumatique selon l'une des revendications précédentes, **caractérisé en ce qu'**entre 3 et 8% des renforts de la partie centrale (10) sont coupés.

10. Pneumatique selon la revendication 9, **caractérisé en ce que** les renforts coupés de la partie centrale (10) sont consécutifs.

**Patentansprüche**

1. Reifen, welcher wenigstens eine Festigkeitsträger umfassende Karkassenbewehrung (2) aufweist, die radial außen von einer Scheitelbewehrung (3) überlagert wird, die ihrerseits radial innerhalb eines Laufstreifens (4) angeordnet ist, wobei die Scheitelbewehrung (3) aus wenigstens einer Schicht von Verstärkungselementen besteht, wobei der Laufstreifen (4) über zwei Seitenwände (6) mit zwei Wülsten (5) verbunden ist, wobei die Wülste (5) dazu bestimmt sind, mit einem Felgenhorn in Kontakt zu kommen, das einen höchsten Punkt des Felgenhorns (C) aufweist, wobei jeder Wulst (5) wenigstens ein in Umfangsrichtung verlaufendes Verstärkungselement (7) aufweist, wobei die Karkassenbewehrung (2) ein Ende (8) an jedem Wulst (5) aufweist, wobei das Ende (8) der Karkassenbewehrung (2) einmal in eine radiale Richtung zur Außenseite des Reifens und um das in Umfangsrichtung verlaufende Verstärkungselement (7) herum umgeschlagen ist, so dass ein Umschlag (12) gebildet wird, und danach in die nach innen verlaufende radiale Richtung umgebogen ist, um so eine Faltung zu bilden, die ein radial äußeres Ende (12a) und drei entlang einer axialen Achse benachbarte Teile bildet, die aus einem mittleren Teil (10), einem axial inneren seitlichen Teil (11) und einem axial äußeren seitlichen Teil (9) bestehen, **dadurch gekennzeichnet, dass** eine Elastomerzusammensetzung zur Entkopplung (14) mit einem Sekantenmodul bei 10 % Dehnung, der größer oder gleich 10 MPa und vorzugsweise größer oder gleich 30 MPa und kleiner oder gleich 60 MPa ist, vorhanden ist:

- zwischen dem axial inneren seitlichen Teil (11) und dem mittleren Teil (10) des Umschlags (12), und
- an dem radial äußeren Ende (12a) des Umschlags (12),
- wobei die Elastomerzusammensetzung (14) auf einer radialen Länge vorhanden ist, die zwischen dem radial äußeren Ende (12a) des Umschlags (12) und einem in Bezug auf das Ende des Umschlags radial inneren Punkt F liegt, der sich auf der Seitenwand (6) befindet und von dem radial äußeren Ende um eine Länge beabstandet ist, die größer als 10 mm ist,

und dadurch, dass

- das radial äußere Ende (12a) des Umschlags (12) zwischen dem höchsten Punkt des Felgenhorns C und einem Punkt D angeordnet ist, wobei sich die Punkte C und D auf der Oberfläche der Seitenwand (6) befinden und beiderseits eines Punktes E angeordnet sind, der sich auf der betreffenden Seitenwand bei der Nennquerschnittsbreite befindet,
- der Punkt D bei einer maximalen radialen Länge angeordnet ist, die gleich 85 % der Länge ist, welche zwischen dem axialen Ende S der Scheitelbewehrung (3) und dem höchsten Punkt des Felgenhorns C vorhanden ist.

2. Reifen nach Anspruch 1, **dadurch gekennzeichnet, dass** die Elastomerzusammensetzung zur Entkopplung (14) zwischen dem radial äußeren Ende (12a) des Umschlags (12) und einem Punkt G vorhanden ist, der sich in Bezug auf das Ende (12a) radial innen befindet und von dem radial äußeren Ende um eine Länge beabstandet ist, die kleiner oder gleich 10 mm ist.

3. Reifen nach Anspruch 1, **dadurch gekennzeichnet, dass** die Festigkeitsträger der Karkassenlage (2) einen Winkel bezüglich der Umfangsrichtung zwischen den Punkten C und D aufweisen, der kleiner oder gleich 85° ist.

4. Reifen nach Anspruch 3, **dadurch gekennzeichnet, dass** die Festigkeitsträger der Karkassenlage (2) einen Winkel bezüglich der Umfangsrichtung zwischen den Punkten C und D aufweisen, der gleich +75° oder -75° ist.

5. Reifen nach Anspruch 1, **dadurch gekennzeichnet, dass** die Festigkeitsträger der Karkassenlage (2) einen Winkel aufweisen, der nacheinander gleich - 75°, +75°, +75°, ausgehend von der am weitesten nach außen zur am weitesten nach innen verlaufenden Richtung entlang der axialen Richtung zwischen den Punkten C und D.

6. Reifen nach einem der vorhergehenden Ansprüche, **dadurch gekennzeichnet, dass** die Festigkeitsträger der Karkassenlage (2) einen Winkel bezüglich der Umfangsrichtung zwischen den Punkten D und S aufweisen, der größer oder gleich 85° und vorzugsweise gleich 90° ist.

7. Reifen nach einem der vorhergehenden Ansprüche, **dadurch gekennzeichnet, dass** die Festigkeitsträger der Karkassenlage (2), vom Punkt S und in Richtung der Achse ZZ', einen Winkel von 90° in Bezug auf die Umfangsrichtung aufweisen.

8. Reifen nach einem der vorhergehenden Ansprüche, **dadurch gekennzeichnet, dass** die Festigkeitsträger der Karkassenlage (2) aus textilem Material bestehen, das aus Kunstseide, Nylon, Polyester, Aramid oder ihren Mischungen ausgewählt ist.

9. Reifen nach einem der vorhergehenden Ansprüche, **dadurch gekennzeichnet, dass** 3 bis 8 % der Festigkeitsträger des mittleren Teils (10) geschnitten sind.

10. Reifen nach Anspruch 9, **dadurch gekennzeichnet, dass** die geschnittenen Festigkeitsträger des mittleren Teils (10) aufeinanderfolgend sind.

**Claims**

1. Tyre having at least one carcass reinforcement (2) comprising reinforcers, surmounted radially on the outside by a crown reinforcement (3), itself radially on the inside of a tread (4), said crown reinforcement (3) being made up of at least one layer of reinforcement elements, said tread (4) being connected to two beads (5) by way of two sidewalls (6), said beads (5) being intended to come into contact with a rim flange having a rim flange top (C), each bead (5) having at least one circumferential reinforcement element (7), said carcass reinforcement (2) comprising an end (8) at each bead (5), the end (8) of the carcass reinforcement (2) being turned up once in an outward radial direction of the tyre and about said circumferential reinforcement element (7), so as to form a turnup (12), then being folded in said radially inward direction so as to form a fold forming a radially external end (12a) and three adjacent parts along an axial axis made up of a central part (10), of an axially internal lateral part (11), and of an axially external lateral part (9), **characterized in that** a decoupling elastomer composition (14) having a secant modulus at 10% extension of greater than or equal to 10 MPa and preferably greater than or equal to 30 MPa and less than or equal to 60 MPa is present:

- between the axially internal lateral part (11) and the central part (10) of said turnup (12), and
- at the radially external end (12a) of said turnup (12),
- said elastomer composition (14) being present along a radial length comprised between the radially external end (12a) of the turnup (12) and a radially internal point F with respect to the end of said turnup, said point being situated on the sidewall (6) and at a distance from said radially external end by a length greater than 10 mm, **and in that**
- the radially external end (12a) of the turnup (12) is disposed between the rim flange top C and a point D, said points C and D being situated at the surface of the sidewall (6) and disposed on either side of a point E situated on the sidewall corresponding to the nominal section width,
- said point D being disposed at a maximum radial length equal to 85% of the length present between the axial end S of the crown reinforcement (3) and the rim flange top C.

2. Tyre according to Claim 1, **characterized in that** the decoupling elastomer composition (14) is present between the radially external end (12a) of said turnup (12) and a point G situated radially on the inside with respect to said end (12a) and at a distance from said radially external end by a length less than or equal to 10 mm.

3. Tyre according to Claim 1, **characterized in that** the reinforcers of the carcass ply (2) are set at an angle of less than or equal to 85° with respect to the circumferential direction between the points C and D.

4. Tyre according to Claim 3, **characterized in that** the reinforcers of the carcass ply are set at an angle equal to +75° or -75° with respect to the circumferential direction between the points C and D.

5. Tyre according to Claim 3, **characterized in that** the reinforcers of the carcass ply (2) are set at an angle successively equal to -75°, +75°, +75° starting from the most outward direction to the most inward direction in the axial direction between the points C and D.

6. Tyre according to one of the preceding claims, **characterized in that** the reinforcers of the carcass ply are set at an angle of greater than or equal to 85°, and preferably equal to 90° with respect to the circumferential direction between the points D and S.

7. Tyre according to one of the preceding claims, **characterized in that,** starting from the point S and in the direction of the axis ZZ', the reinforcers of the carcass ply are set at an angle equal to 90° with respect to the circumferential direction.

8. Tyre according to one of the preceding claims, **characterized in that** the reinforcers of the carcass ply are made of a textile material chosen from rayon, nylon, polyester, aramid or a mixture thereof.

9. Tyre according to one of the preceding claims, **characterized in that** between 3 and 8% of the reinforcers of the central part (10) are cut.

10. Tyre according to Claim 9, **characterized in that** the cut reinforcers of the central part are consecutive.

**Fig. 1**

**Fig. 2**

**Fig. 3**

## RÉFÉRENCES CITÉES DANS LA DESCRIPTION

**Documents brevets cités dans la description**

- JP 2293207 A
- EP 1080948 A1
- US 3961657 A